# FASCICULE DE BREVET EUROPEEN

(11) **EP 1 086 324 B1**
(45) Date de publication et mention de la délivrance du brevet: **12.11.2003**
(21) Numéro de dépôt: 00918945.7
(22) Date de dépôt: 11.04.2000
(51) Int. Cl.: F16G 3/04

(54) **AGRAFE A GRIFFES POUR JONCTIONS DE BANDES TRANSPORTEUSES**
KLAMMEN MIT KRALLEN FÜR FÖRDERRIEMENVERBINDUNGEN
FASTENER FOR JUNCTION POINTS OF CONVEYOR BELTS

(30) Priorité: 12.04.1999 FR 9904571
(43) Date de publication de la demande: 28.03.2001
(73) Titulaire: Aser, F-42405 Saint-Chamond (FR)
(72) Inventeur: JAKOB, Horst, F-30360 Deaux (FR)
(74) Mandataire: Breese, Pierre
(86) Numéro de dépôt international: FR0000928
(87) Numéro de publication internationale: WO00061967

(56) Documents cités:
- DE-C- 692 763
- DE-C- 832 366
- FR-A- 2 163 833
- US-A- 2 224 532
- US-A- 4 344 209

## Description

L'invention concerne des agrafes pour jonctions de bandes transporteuses, de courroies et de produits similaires, qui comportent des éléments de charnière et sont susceptibles d'être fixées à cheval sur une extrémité de bande transporteuse, les éléments de charnière pouvant être placés entre des éléments de charnière semblables appartenant à une agrafe semblable fixée à l'autre extrémité de bande transporteuse, les deux agrafes étant reliées par une tige de liaison et d'articulation passant alternativement dans un élément de charnière appartenant à l'une des deux agrafes et dans un élément de charnière appartenant à l'autre des deux agrafes, et ainsi de suite.

Les agrafes de ce type général peuvent être reliées à une extrémité de bande transporteuse par divers moyens connus tels que des rivets, des pointes, des crampons à deux pointes, des systèmes vis-écrou. Certaines agrafes peuvent être reliées directement, sans emploi d'organes de fixation séparés, grâce à des griffes faisant partie de l'agrafe, lesquelles sont engagées dans l'épaisseur de la bande transporteuse lorsque l'agrafe est resserrée sur une extrémité de bande transporteuse.

Le document DE-A-832 366 montre de telles agrafes figures 1, 2, 3 et 4 (en particulier griffes 10, 11, 12, 13, figure 3 et griffes 14, 15, 16, 17, figure 4).

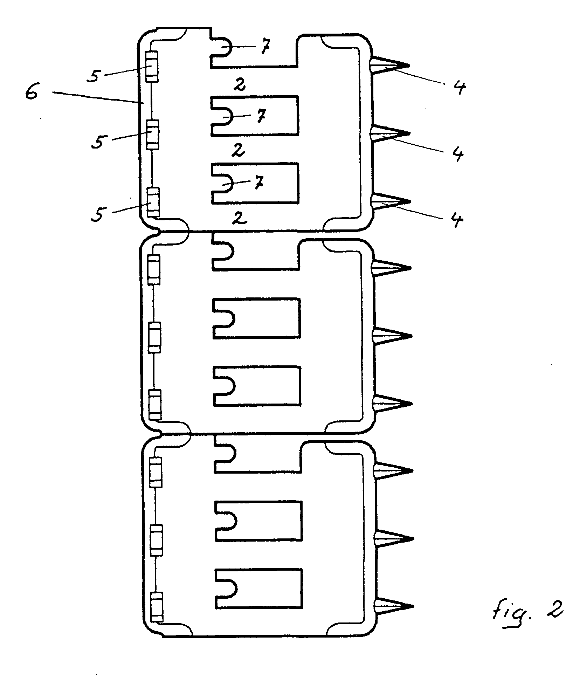

Le document US-A-4 344 209 montre également des griffes 106, à la figure 2.

Un document FR-A-2 163 833 tombé dans le domaine public montre de telles agrafes, comportant des griffes courbes qui, l'agrafe étant posée, traversent complètement la bande transporteuse et sont repliées sous celle-ci, et non sous la partie basse de l'agrafe (voir p. 4 1 14 à 28)..

Cependant, comme un écartement des deux branches de l'agrafe n'est pas exclu avec une telle disposition, ce brevet a prévu d'employer, en combinaison avec les griffes faisant partie de l'agrafe, des crampons classiques à deux pointes, qui ont pour but d'empêcher que lors du fonctionnement de la bande transporteuse les deux parties de l'agrafe formant des plaques de fixation, ne s'écartent, les griffes n'étant pas capables, telles qu'elles sont agencées, d'empêcher un tel écartement.

Le document US-A-2 224 532 montre aux figures 6 à 8, une agrafe dont les plaques inférieure et supérieure sont munies de griffes venant coopérer avec des ouvertures ménagées dans les plaques.

La présente invention a pour objet de proposer une agrafe pour bande transporteuse, dont la fixation est assurée par griffes faisant partie de l'agrafe elle-même, mais ne faisant pas appel, en combinaison, à des moyens de fixation classiques séparés, tels que des crampons, des rivets, des systèmes vis-écrou, et ne nécessitant pas du tout pour sa pose le percement préalable de trous dans l'extrémité de la bande transporteuse, comme cela est le cas, par exemple pour les rivets, souvent employés.

Un autre objet de l'invention est de proposer une agrafe telle que visée ci-dessus, ne comportant, une fois fixée sur une extrémité de bande transporteuse, aucune aspérité ne dépassant des faces extérieures des plaques de fixation, susceptibles d'être accrochées par un râcleur comme ceux utilisés dans de nombreuses industries utilisatrices de bandes transporteuses.

Ce problème est résolu au moyen d'une agrafe pour jonctions de bandes transporteuses comportant une plaque de fixation supérieure et une plaque de fixation inférieure, les deux plaques étant reliées sur un de leur bord par des éléments de charnière en forme de U, laissant entre eux des espaces permettant l'imbrication d'éléments de charnière semblables appartenant à une autre agrafe semblable, une tige de liaison et d'articulation et de liaison pouvant être introduite dans les éléments de charnière imbriqués pour réaliser la liaison articulée des agrafes, ladite agrafe étant munie de griffes qui font partie de la plaque de fixation supérieure et qui sont orientées vers la plaque de fixation inférieure, qui présentent une courbure, ou des courbures dont la concavité est de préférence orientée vers les éléments de charnière, ladite plaque inférieure comportant sur son côté situé à l'opposé des éléments de charnière des portes, lesdites portes étant constituées par une barrette de la matière constitutive de la plaque inférieure, orientée parallèlement au bord de la plaque inférieure situé à l'opposé des éléments de charnière et relevée par rapport au plan général de la plaque inférieure, une découpe étant pratiquée de chaque côté de la barrette, le bord de la plaque inférieure situé à l'opposé des éléments de charnière étant relevé et présentant un profil courbe, les griffes de la plaque supérieure, les portes et le bord relevé de la plaque inférieure étant respectivement disposés de façon telle que lorsque l'agrafe, initialement ouverte, est refermée, les pointes des griffes rencontrent le bord relevé à profil courbe dans la partie haute de celui-ci, sur le côté du bord relevé à profil courbe orienté vers les éléments de charnière de l'agrafe.

Une forme de réalisation particulièrement avantageuse, va maintenant être décrite, à titre illustratif, mais non exclusif, en relation avec le dessin dont :

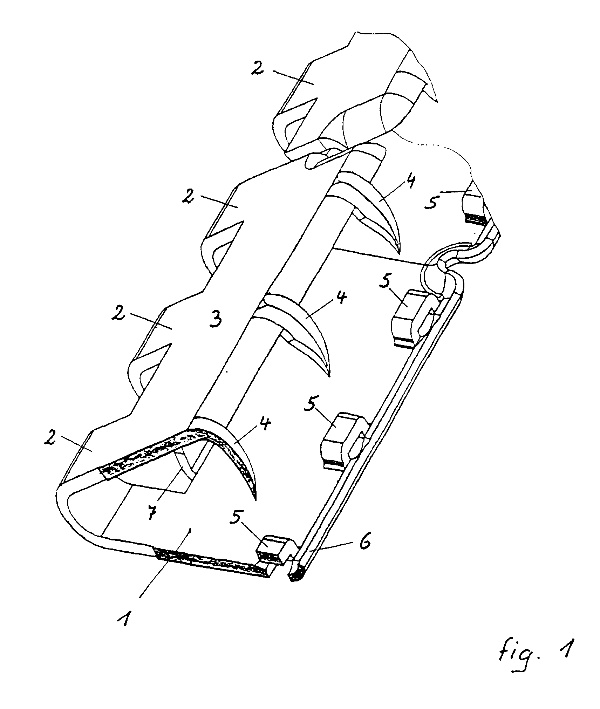

- la figure 1 représente une agrafe selon l'invention, vue en perspective,
- la figure 2 représente une bande d'agrafes telles qu'elles sortent de la presse à découper et à estamper, présentées en bandes d'agrafes,

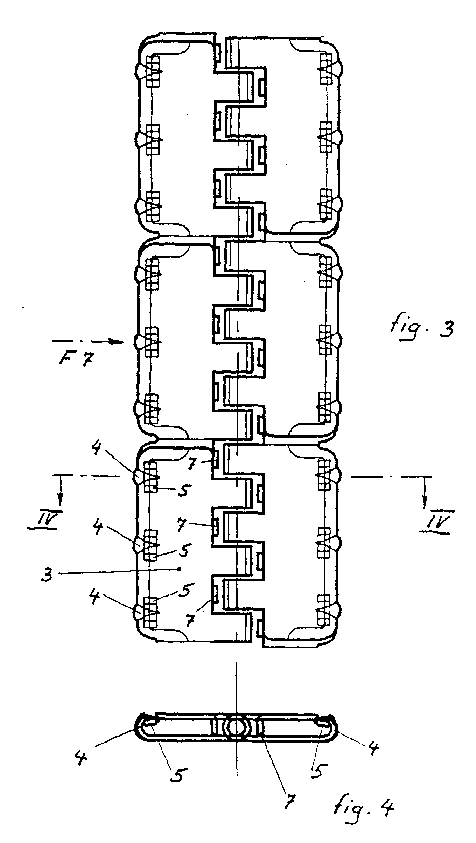

- la figure 3 représente des agrafes repliées imbriquées les unes dans les autres par les éléments de charnière,
- la figure 4 est une coupe des agrafes de la figure 3 selon la ligne de coupe IV-IV de la figure 3,

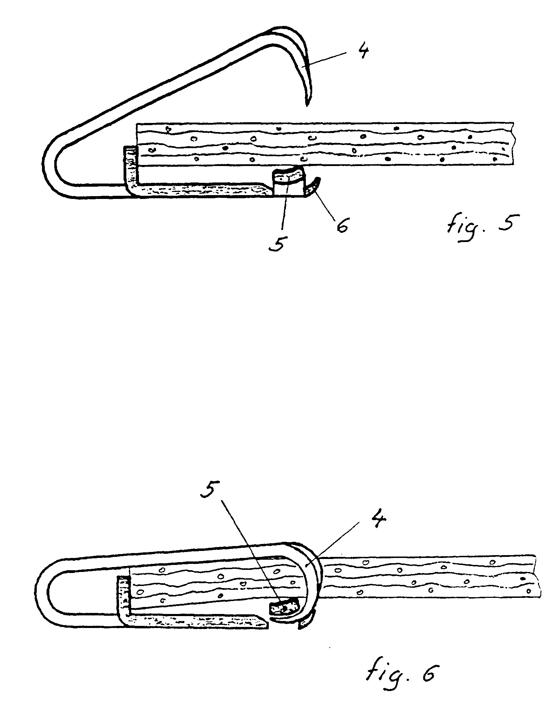

- les figures 5 et 6 montrent des agrafes en cours de serrage sur l'extrémité d'une bande transporteuse,

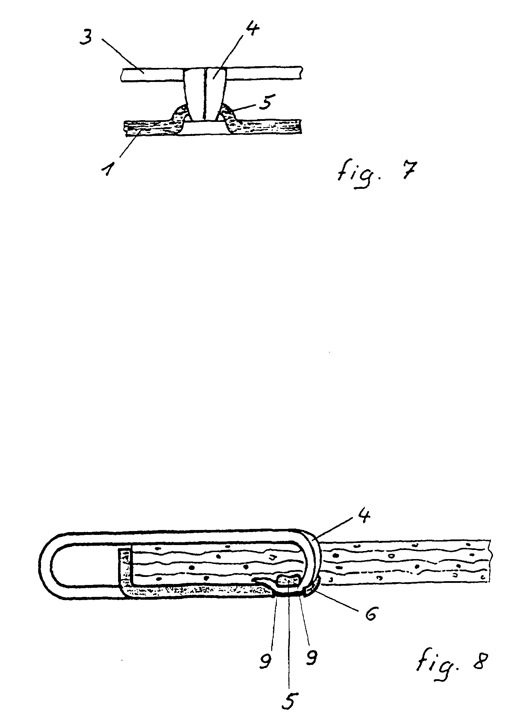

- la figure 7 montre un détail, vu selon la flèche F7 de la figure 3, de l'agrafe du côté griffes, serrée sur l'extrémité d'une bande transporteuse,
- la figure 8 montre des pointes de griffes engagées dans les portes, déformées par un affaissement des portes.

Sur la figure 1, les agrafes comportent une plaque de fixation inférieure 1 des éléments de charnière 2 en forme de U. Les plaques de fixation supérieures 3 comportent des griffes 4 présentant une légère courbure à la pointe et à la jonction avec la plaque de fixation supérieure 3. Les plaques de fixation inférieures 1 comportent, sur leur côté opposé à celui des éléments de charnière 2, des portes 5 et à l'une de leurs extrémités longitudinales, une demi-porte 5'. On remarque des butées 7 qui serviront lors de la pose pour caler l'agrafer contre le chant de l'extrémité de la bande transporteuse. Un élément particulièrement important est le bord relevé 6 qui forme une seule pièce avec le reste de la plaque de fixation inférieure 1. Le bord relevé 6 a un profil courbe, tant à l'extérieur qu'à l'intérieur et sa courbe intérieure affleure l'entrée des portes au droit de celle-ci. Ce profil courbe joue un rôle de raidisseur en général, mais en particulier la courbe, côté intérieur, joue un rôle essentiel qui, lors de la pose des agrafes, consiste à guider les pointes de griffes dans l'entrée des portes en les faisant se courber de façon appropriée, car, lorsque les deux moitiés de l'agrafe sont amenées chacune contre l'une des faces respectives de l'extrémité de la bande transporteuse, que les griffes traversent l'épaisseur de la bande transporteuse et que leurs pointes rencontrent la courbe intérieure du bord relevé 6, elles se courbent progressivement, la courbe intérieure du bord relevé 6 servant de matrice.

Des tronçons de bord courbe existent également entre les naissances des griffes sur le bord de la plaque de fixation supérieure 3.

D'autres détails intéressants apparaîtront dans la description de la pose des agrafes selon l'invention.

Sur la figure 2 on reconnaît les griffes 4, les portes 5, des futures butées 7, les éléments de charnière 2, encore à plat à ce stade, le bord relevé courbe 6. On remarque que les griffes 4 ont un profil « en toit » obtenu par estampage dans la presse de découpe, conférant une meilleure robustesse à la griffe.

Sur la figure 3 on remarque les pointes des griffes 4 engagées dans les portes 5, les butées 7 redressées étant prévues pour le calage de l'extrémité de la bande transporteuse sur laquelle l'agrafe est fixée.

La figure 4 est une coupe des agrafes de la figure 3 dans laquelle les éléments déjà cités sont identifiables par leurs références.

La pose des agrafes va maintenant être expliquée, ainsi que les avantages procurés tant lors de la pose des agrafes qu'une fois l'agrafe posée.

Un premier avantage tient au fait qu'aucun avant-trou n'est nécessaire avant la pose des agrafes. Celles-ci sont fixées sur l'extrémité des bandes transporteuses uniquement grâce aux griffes, qui traversent l'épaisseur de la bande transporteuse, en écartant, si le problème se présente, les fils des armatures des bandes transporteuses, sans les couper ni même les léser. Comme aucun autre organe de fixation séparé classique nécessitant des avant-trous comme les rivets n'est nécessaire en raison de la retenue, expliquée plus loin, des pointes des griffes, l'extrémité de la bande transporteuse sur laquelle une telle agrafe est posée garde parfaitement intactes ses propriétés de résistance à la traction.

Pour la pose de l'agrafe, il suffit, comme le montrent les figures 5 et 6, de la présenter à cheval sur l'extrémité de la bande transporteuse, en la poussant jusqu'à ce que le chant de l'agrafe rencontre la butée. L'agrafe peut alors être refermée au marteau, la plaque de fixation basse de l'agrafe étant placée contre une surface plane lourde, ou au moyen d'une pince pneumatique ou hydraulique non spécifique de l'agrafe selon l'invention. Les griffes 4 traversent alors l'épaisseur de la bande transporteuse et, au sortir de la bande transporteuse, elles rencontrent la courbure intérieure du bord relevé à profil courbe. Leurs pointes déjà courbes, se courbent progressivement encore plus en suivant cette courbure intérieure du bord relevé et se logent sous les portes, en allant au-delà des portes en appui sur la face supérieure de la plaque de fixation intérieure.

Il faut remarquer que lorsque l'agrafe est complètement serrée, et refermée sur l'extrémité de la bande transporteuse, la fixation de l'agrafe est obtenue grâce d'une part aux griffes traversant l'épaisseur de la bande transporteuse et d'autre part grâce au bord relevé courbe de la plaque de fixation inférieure qui, en conjugaison avec les bords courbes situés entre les naissances des griffes de la plaque de fixation supérieure, pincent énergiquement l'extrémité de la bande transporteuse. Ce pincement renforce la prise de l'agrafe et contribue à une meilleure longévité de la jonction obtenue, en soulageant les griffes et en évitant des déchirures précoces qui pourraient autrement éventuellement se produire sous l'effet de fortes tractions appliquées aux griffes et transmises dans l'armature de la bande transporteuse. Ce pincement a aussi pour effet de coordonner l'action des griffes en formant une liaison dynamique de fait entre celles-ci, ce qui réduit les tractions ponctuelles susceptibles d'être exercées sur une seule griffe, en répartissant la traction globale sur l'ensemble des griffes.

Enfin, on comprend que les pointes des griffes 4 engagées sous les barrettes formant les portes 5 sont retenues par celles-ci à l'encontre des forces verticales tendant à l'ouverture des agrafes et au dégagement des griffes 4 de l'extrémité de la bande transporteuse.

Ceci est d'autant plus vrai que comme le montre la figure 8 lors de la pose des agrafes, du fait de la configuration des barrettes des portes 5 et des pointes des griffes 4, les barrettes, tout en s'imprimant partiellement dans la matière de la face inférieure de la bande transporteuse, se déforment en s'aplatissant légèrement donc en appuyant sur les pointes des griffes 4 engagées sous elles, ce qui provoque un double pliage des pointes des griffes 4 le long des arêtes inférieures avant et arrière 9 des portes 5 aplaties, lequel double pliage a pour conséquence un verrouillage géométrique de l'ensemble porte-pointe de griffe. En effet toute traction tendant à extraire les pointes des griffes 4 des portes 5, se heurte à un double blocage dû à ces arêtes 9.

L'agrafe selon l'invention atteint ainsi tous les buts annoncés au début. Bien entendu de nombreuses variantes sont possibles, tout en restant dans le champ des revendications annexées.

## Revendications

1. Agrafe pour jonctions de bandes transporteuses comportant une plaque de fixation supérieure (3) et une plaque de fixation inférieure (1), les deux plaques étant reliées sur un de leur bord par des éléments de charnière (2) en forme de U, laissant entre eux des espaces permettant l'imbrication d'éléments de charnière semblables appartenant à une autre agrafe semblable, une tige de liaison et d'articulation et de liaison pouvant être introduite dans les éléments de charnière imbriqués pour réaliser la liaison articulée des agrafes, ladite agrafe étant munie de griffes (4) qui font partie de la plaque de fixation supérieure (3), qui sont orientées vers la plaque de fixation inférieure (1) et qui présentent une courbure, ou des courbures, dont la cavité est orientée vers les éléments de charnière, ladite plaque inférieure (1) comportant sur son côté situé à l'opposé des éléments de charnière (2) des portes (5), **caractérisée en ce que** lesdites portes (5) sont constituées par une barrette de la matière constitutive de la plaque inférieure, orientée parallèlement au bord de la plaque inférieure situé à l'opposé des éléments de charnière et relevée par rapport au plan général de la plaque inférieure, un cisaillement étant pratiqué de chaque côté de la barrette et **en ce que** le bord de la plaque inférieure (1) situé à l'opposé des éléments de charnière (2) est relevé et présente un profil courbe, les griffes (4) de la plaque supérieure, les portes (5) et le bord relevé (6) de la plaque inférieure (1) étant respectivement disposés de façon telle que lorsque l'agrafe, initialement ouverte, est refermée, les pointes des griffes (4) rencontrent le bord relevé (6) à profil courbe dans la partie haute de celui-ci, sur le côté du bord relevé à profil courbe orienté vers les éléments de charnière de l'agrafe.

2. Agrafe selon la revendication 1, **caractérisée en ce que** des bords présentant un profil courbe, orientés vers la plaque de fixation inférieure, sont ménagés sur les plaques de fixation supérieures entre les naissances des griffes (4) du côté de la plaque de fixation supérieure, situé à l'opposé des éléments de charnière.

3. Agrafe selon la revendication 1 ou 2, **caractérisée en ce que** les griffes (4) ont un profil « en toit ».

## Patentansprüche

1. Klammer zur Verbindung von Förderbändern, die eine obere Befestigungsplatte (3) und eine untere Befestigungsplatte (1) aufweist, wobei beide Platten an einem ihrer Ränder durch U-förmige Scharnierelemente (2) verbunden sind, die zwischen sich einen Spalt offen lassen, der das Einhaken ähnlicher, zu einer ähnlichen Klammer gehörenden, Scharnierelemente ermöglicht, wobei ein Verbindungs- und Gelenkstab in den miteinander verhakten Scharnieren zur gelenkigen Verbindung der Klammern eingeführt werden kann, wobei besagte Klammer mit zur oberen Befestigungsplatte (3) gehörenden Krallen (4) versehen ist, welche in Richtung der unteren Befestigungsplatte (1) orientiert sind und eine Biegung bzw. Biegungen aufweisen, deren Vertiefung in Richtung der Scharnierelemente orientiert ist, wobei besagte untere Platte (1) auf ihrer der Scharnierelemente (2) entgegen gesetzten Seite Türen (5) aufweist, **dadurch gekennzeichnet, dass** besagte Türen (5) aus einem Steg aus dem selben Material wie die untere Platte bestehen, welcher parallel zu dem, den Scharnierelementen entgegen gesetzten Rand der unteren Platte verläuft und gegenüber der allgemeinen Flucht der unteren Befestigungsplatte aufragt, wobei auf beiden Seiten des Steges ein Einschnitt durchgeführt wird, und dass der, entgegengesetzt zu den Scharnierelementen (2) liegende Rand der unteren Platte (1) hochgezogen ist und ein krummes Profil aufweist, wobei die Krallen (4) der oberen Platte, die Türen (5) und der hochgezogene Rand (6) der unteren Platte (1) jeweils derart angeordnet sind, dass, wenn die, ursprünglich geöffnete, Klammer geschlossen wird, die Spitzen der Krallen (4) den hochgezogenen Rand (6) mit krummen Profil in dessen oberen Teil auf der, in Richtung der Scharnierelemente der Klammer orientierten Seite des hochgezogenen Randes mit krummen Profil treffen.

2. Klammer nach Anspruch 1, **dadurch gekennzeichnet, dass** ein krummes Profil aufweisende und in Richtung der unteren Befestigungsplatte orientierte Ränder auf den oberen Befestigungsplatten, zwischen dem Beginn der Krallen (4) auf der, den Scharnierelementen entgegen gesetzten Seite der oberen Befestigungsplatte, angeordnet sind.

3. Klammer nach Anspruch 1 oder 2, **dadurch gekennzeichnet, dass** die Klammern (4) ein "Dachprofil" besitzen.

## Claims

1. Connecting clip for transport bands comprising an upper attachment plate (3) and a lower attachment plate (1), the two plates being connected on one of their edges by U shaped hinge elements (2), leaving a space between them to allow similar hinge elements of similar another clip to be inserted, a connecting and hinge pin that can be introduced into the inserted hinge elements to create the articulated connection between the clips, the said clip being equipped with hooks (4) that are part of the upper attachment plate (3), and which face the lower attachment plate (1) and have one or more curved sections, the cavity of which faces the hinge elements and the said lower attachment plate (1) having, on the face opposite that bearing the hinge elements (2), a ramp (5), **characterised in that** the said ramp (5) is formed by a bar made from the material which composes the lower plate, which runs parallel to the edge of the lower plate situated opposite the hinge elements and raised with respect to the main plane of the lower plate, with a cutout being made on either side of the bar, and **in that** the edge of the lower plate (1) situated opposite the hinge elements (2) is raised and has a curved profile, the hooks (4) of the upper plate, the ramps (5) and the raised edge (6) of the lower plate (1) being positioned so that when the clip, which is initially open, is closed, the ends of the hooks (4) come into contact with the curved profile raised edge (6) located at the top of it, on the side of the curved profile raised edge facing the hinge elements of the clip.

2. Clip of claim 1, **characterised in that** the edges which have a curved profile, facing the lower attachment plate, are located in the upper attachment plates between the start of the hooks (4) on the side of the upper attachment plate, located opposite the hinge elements.

3. Clip of claim 1 or 2, **characterised in that** the hooks (4) have a "roof" shaped profile.
